# EUROPEAN PATENT SPECIFICATION

(11) **EP 4 228 865 B1**
(45) Date of publication and mention of the grant of the patent: **25.11.2026**
(21) Application number: 21794990.8
(22) Date of filing: 12.10.2021
(51) Int. Cl.: B25J 9/00

(54) **SYSTEM FOR ASSISTING AN OPERATOR IN EXERTING EFFORTS**
SYSTEM ZUR UNTERSTÜTZUNG EINES BEDIENERS BEI DER AUSFÜHRUNG VON VERSUCHEN
SYSTÈME DESTINÉ À AIDER UN OPÉRATEUR À EXERCER DES EFFORTS

(30) Priority: 13.10.2020 US 202063091022 P
(43) Date of publication of application: 23.08.2023
(73) Proprietor: Iuvo S.r.L., 56025 Pontedera (PI) (IT)
(72) Inventor: GIUSFREDI, Giacomo, 56025 Pontedera (PI) (IT); MORELLI, Luca, 56025 Pontedera (PI) (IT); MOISE, Matteo, 56025 Pontedera (PI) (IT); GIOVACCHINI, Francesco, 56025 Pontedera (PI) (IT)
(74) Representative: Inspicos P/S
(86) International application number: PCT/IB2021/059367
(87) International publication number: WO 2022/079610

(56) References cited:
- WO-A1-2019/016629
- WO-A1-2019/136465
- US-A- 5 395 304
- US-A1- 2005 215 931
- US-A1- 2020 315 896
- GRAZI LORENZO ET AL: "Design and Experimental Evaluation of a Semi-Passive Upper-Limb Exoskeleton for Workers With Motorized Tuning of Assistance", IEEE TRANSACTIONS ON NEURAL SYSTEMS AND REHABILITATION ENGINEERING, IEEE, USA, vol. 28, no. 10, 4 August 2020 (2020-08-04), pages 2276 - 2285, XP011813113, ISSN: 1534-4320, [retrieved on 20201007], DOI: 10.1109/TNSRE.2020.3014408

## Description

### Field of the Disclosure

The disclosure relates to a system for a human body in an exoskeleton and supports assistive devices adapted to augment an operator's performance, mitigate repetitive strain injuries, or assist in exerting efforts.

### Background

Wearable industrial exoskeleton technologies can improve endurance and safety in industrial settings. These exoskeletons increase industrial productivity and prevent common workplace injuries by minimizing muscles and tendons' overuse. Exoskeletons can support and augment an operator during strenuous activities, including lifting, stooping, bending, squatting, and overhead work, to reduce employee fatigue and workplace injuries. Exoskeletons may be additionally valuable in repetitive and/or awkward activities. Assisted by an exoskeleton, operators can effortlessly hold heavy hand tools, increasing productivity and accuracy by reducing muscle fatigue. Older workers with valuable experience and intuition may, through an exoskeleton system, be able to work longer than they otherwise could in physically demanding or challenging jobs. Documents WO2019/016629A1, XP011813113 and WO2019/136465A1 disclose multiple examples of exoskeleton systems.

An exoskeleton system may be arranged to transfer loads through the exoskeleton to the ground in standing or kneeling positions and allow operators to use heavy tools as if they were weightless. The exoskeleton system can be configured to move naturally and adapt to different body types and heights. The exoskeleton system can replicate the shoulder's dynamic movement while the interface can enwrap the operator's body like a second skin.

An exemplary exoskeleton system is arranged for the upper body, including the shoulder and arms, by enhancing performance by reducing forces at the shoulder (e.g., gravitational forces that urge the arms downward), and enabling the operator to perform chest-to-ceiling level tasks for extended periods, with less effort. The exoskeleton may help the operator elevate and support the operator's arms and reduce physical risks and discomfort from tasks carried out above chest height or overhead.

It has been found that the lower body, trunk, and upper body regions could benefit from active and passive exoskeletons. Muscle-activity reductions have been reported as an effect of active and passive exoskeletons. Exoskeletons have the potential to reduce the underlying factors associated with work-related musculoskeletal injury. While certain exoskeletons are available, several technical issues hinder the practical use of exoskeletons in the industry. Specific problems include discomfort for passive and active exoskeletons, the device's weight, alignment with human anatomy and kinematics, and detection of human intention to enable smooth movement for active exoskeletons.

Another issue is ensuring that the exoskeleton system's assistance is commensurate with the operator's particular needs and activities. Existing systems may provide static or dynamic assistive forces but require complex control and adjustment systems, making an adaption of exoskeleton systems to different operators in subsequent shifts costly and impractical. Still, existing exoskeleton systems are insufficiently adaptable to the operators' specific dimensions, strength, and tasks, leading to poor compliance and poor results across different operators. Existing exoskeleton devices may be poorly adapted to allow an operator to perform unrelated tasks and doffed if such tasks are to be comfortably and effectively performed.

Safety concerns further limit the widespread adoption and use of assistive exoskeleton systems. As exoskeleton systems can support extension and/or flexion of an operator's joints, an operator can be injured through over-extension or over-flexion of joints due to the assistive forces provided by these systems. Similar concerns exist regarding damage to the exoskeleton systems themselves or non-operators, as tension stored in exoskeleton systems may be released suddenly when not in use, causing damage to the exoskeleton systems and their surroundings can be expensive to mitigate or repair. A need exists for safer and more straightforward to operate exoskeleton systems.

This disclosure's embodiments aim to overcome these technical issues and provide exoskeleton solutions with an improved exoskeleton system that can overcome existing problems and lead to broader adoption by industry.

### SUMMARY

Embodiments of the disclosure system relate to a passive or pseudo-passive exoskeleton system for relieving a load on a joint, such as a shoulder, and assisting an operator's effort. The embodiments of the present disclosure improve the prior art solutions discussed above, particularly from the standpoints of ergonomics and convenience of use.

Specifically, the system's embodiments rely on the principle of a passive, assistive exoskeleton having an active adjustment or regulation mechanism using an elastic mechanism arranged to generate a torque proportional to the elevational angle of a joint, such as an operator's arm. According to the embodiments, the active adjustment or regulation mechanism is configured to modify the elastic mechanism's distance between two extremities to pretension or tension the elastic mechanism among a plurality of predetermined tension settings and a level of assistance provided by the exoskeleton. The elastic mechanism may be spring-based, including at least one elastic spring element. An adjustment or regulation device may be manually driven operatively connected to a control system and motor to selectively and automatically tension the elastic mechanism based on operator input and sensor feedback.

According to an embodiment, a system for assisting an operator in exerting efforts comprises a garment that the operator can wear. The garment may engage mutually mobile parts of a joint of the operator. It may include a mobile frame that defines at least one axis of rotation, which assumes a position corresponding to the operator's joint. A compensation device may be carried by the garment and/or the frame and operable to compensate resistive moments acting on the joint during the operator's effort. The garment is optional, and the exoskeleton may be used without such a garment.

The compensation device comprises a first rotatable member and a second rotatable member, which are connected and brought into relative motion about a first axis of rotation because of the joint of the operator's body. The second rotatable member can rotate about a second axis of rotation. The elastic mechanism has at least one elastic element, arranged for acting on the second rotatable member to impart on the first axis of rotation a moment opposite to the resistive moments.

The first rotatable member may be a gear wheel, fixedly mounted on the first portion and aligned with the first axis of rotation. The second rotatable member may be a gear wheel, fixedly mounted on the second portion, and rotatable about the second axis of rotation and mobile according to a revolution about the axis of rotation. The elastic mechanism engages the second rotatable member, exerting a linear force on the second rotatable member's eccentric point. The first and second rotatable members and the elastic mechanism are mutually prearranged with a follower and a gear stop in such a way as to define an allowed motion, from a predetermined maximum extension angle to a predetermined maximum flexion angle.

The first rotatable member may be provided with a safety lock for preventing rotation of the first rotatable member or corresponding movement of the compensation device. The safety lock may be engaged manually using a selector on the device's casing and may be operable only at a predetermined extension or flexion angle.

The elastic mechanism may comprise a set of coaxial springs, so a second end of the elastic mechanism is adjustable for setting the elastic mechanism's pre-tensioning. The set of coaxial springs may be connected to the first and second brackets. The first bracket is mounted on the second rotatable member's eccentric point, and a second bracket is mounted on the second portion.

A regulation device may be connected and adapted to regulate tension in the elastic mechanism. The regulation device is arranged for pre-tensioning or generally tensioning the elastic mechanism at a plurality of discrete or varied tension settings and placing the tension at one of the plurality of discrete tension settings. The plurality of discrete tension settings may correspond or be selected according to the operator's dimensions, posture, strength, and/or tasks, optimizing the operator's productivity and comfort.

These and other features, aspects, and advantages of the present disclosure will better understand the following description, appended claims, and accompanying drawings.

### BRIEF DESCRIPTION OF THE DRAWINGS

Fig. 1 is a partial perspective view of an exoskeleton system according to the disclosure.
Fig. 2 is a plan view of the first side of an active mechanism in the exoskeleton system of Fig. 1 without a portion of a casing.
Fig. 3 is a plan view of the first side of components of the active mechanism of Fig. 2, without a portion of other components.
Fig. 4 is a schematic sectional view of a regulation device taken from Fig. 3.
Fig. 5 is a schematic sectional view of a rotational stop assembly taken from Fig. 2.
Fig. 6A is a schematic view of the rotational stop assembly of Fig. 5 in the first position.
Fig. 6B is a schematic view of the rotational stop assembly of Fig. 5 in a second position.
Fig. 7A is an exploded sectional view of a safety lock taken from Fig. 2.
Fig. 7B is a schematic sectional view of the safety lock taken from Fig. 7A in an unlocked position.
Fig. 7C is a schematic sectional view of the safety lock taken from Fig. 7A in a locked position.
Fig. 7D is a detailed view of exemplary components of the safety lock from Fig. 7A.

The drawing figures are not necessarily drawn to scale. Instead, they are drawn to provide a better understanding of the components thereof, and are not intended to be limiting in scope, but to provide exemplary illustrations.

### DETAILED DESCRIPTION OF VARIOUS EMBODIMENTS

A better understanding of the disclosure's different embodiments may be had from the following description read with the drawings in which like reference characters refer to like elements.

While the disclosure is susceptible to various modifications and alternative constructions, certain illustrative embodiments are shown in the drawings and are described below.

The references used are provided merely for convenience and hence do not define the sphere of protection or the embodiments.

The system described is a system, for example, an exoskeleton system, for assisting an operator in exerting efforts, of the type comprising:
- a garment that can be worn by the operator, which is to engage, when worn, the mutually mobile parts of a joint of the operator and which defines at least one axis of rotation to assume a position corresponding to the joint; the garment is optional; and
- a compensation device carried by the garment and designed to operate to compensate for the resistive moments that act on the joint during the operator's effort.

The system described has been devised, referring to assisting the operator in efforts involving the shoulder joint. As seen in what follows, the same principles set forth may also be applied for systems for assisting the operator in efforts involving other joint groups or other joints, such as the hip joint or the knee joint.

The system described is characterized in that the compensation device comprises:
- a first rotatable member or gear and a second rotatable member or gear, which are connected and are brought into relative motion about the axis of rotation because of the movement of the joint of the operator's body, wherein the second rotatable member is rotatable about its axis; and
- an assembly or elastic mechanism equipped with one or more coaxial elastic elements, which is prearranged for acting on the second rotatable member to impart on the axis of rotation a moment opposite to the resistive moments;
- wherein the first and second rotatable members and the elastic mechanism are mutually prearranged with a follower and a gear stop in such a way as to define an allowed motion, from a predetermined maximum extension angle to a predetermined maximum flexion angle.

The maximum extension angle and the maximum flexion angle referred to above, the elastic mechanism acts against the gear stop making a maximum extension angle and maximum flexion angle condition stable.

The present applicant has found that the possibility for the system to define an allowed degree of motion between a stable maximum extension angle and/or maximum flexion angle condition constitutes a fundamental characteristic for guaranteeing adequate comfort for the operator, above all for the person who, wearing the system, must perform a range of tasks requiring maintaining varying positions for extended periods.

The system described is hence suited for constituting a system that can be worn by the operator for the entire work shift, with the convenience for the operator to put it on just once when getting dressed at the start of the shift without doffing the system to perform ancillary tasks unrelated to the functions of the system.

Once again, in the perspective of improving comfort for the operator, the system's elastic mechanism is provided with a system for adjustment of the tensioning or pre-tensioning of the elastic mechanism in various preferred embodiments. This system enables the operator to choose the desired assistance, possibly even excluding the assistance altogether, for example, during a prolonged pause from the work shift. The system for adjusting the tensioning of the elastic mechanism may further allow the system to be interchangeable between or worn by multiple operators, e.g., during successive shifts, and by operators who may have different dimensions, abilities, or tasks to perform.

As seen in what follows, in various preferred embodiments, the system described has a system of axes of movement, which can assist and follow in a precise and fluid way practically all the movements of the joint and of the possible joint group or girdle to which the joint belongs.

This system of axes of movement has proven to render the system of assistance optimal from the ergonomic standpoint and further increase the operator's perception of comfort.

Embodiments of the system for assisting an operator in exerting efforts may comprise a garment arranged to be worn like an article of clothing and support a mobile frame. The mobile frame may be arranged to define an assisted axis of motion of the system and to define one or more degrees of freedom, allowing the system to closely approximate the operator's movements. The mobile frame may attach to the garment by and comprise linear guides arranged at the operator's back and proximate the operator's scapulae for close conformity with the operator's unique dimensions and strength and based on the operator's current task.

The linear guides may define axes of translation relative to the operator. They may support a compensation device comprising articulated elements that define an assisted axis of rotation of the system. The articulated elements may define the first and second axes of rotation corresponding to abduction/adduction of the arm and rotation of the shoulder, respectively. The third axis of rotation defined by the articulated elements corresponds to the assisted axis of rotation of the system. An assistive torque is provided to augment and assist the efforts of the operator.

The articulated elements may comprise first and second gear or rotatable members that move about the assisted axis of rotation in response to the movement of the operator's arm. The articulated elements may comprise an assembly comprising an elastic mechanism arranged to provide a moment about the second rotatable member and compensating resistive moments, e.g., gravitational forces, that act on the joint, e.g., a shoulder joint, during movements of the operator.

In embodiments, the elastic mechanism may be supported by brackets arranged in the articulated element. The first rotatable member rotates as the operator's joint moves and generates rotation about the third axis of rotation. The rotation of the first rotatable member rotates the second rotatable member and adjusts the tension in the elastic mechanism. The increased or decreased tension in the elastic mechanism is then transferred or transmitted through the second rotatable member to the first rotatable member, influencing the operator's joint, e.g., to make raising the operator's arm from a neutral position easier. The tension may be transmitted from the second rotatable member to the first rotatable member according to the first and second rotatable members' gear reduction ratio. The ratio is chosen, so the torque applied to the operator's joint has a profile caused by gravity; for example, the torque generated by the gear reduction ratio may have a maximum value at 90 degrees.

One bracket of the elastic mechanism may be mounted eccentrically on the second rotatable member, so the force applied by or transferred from the elastic mechanism to the operator depends on the angle of rotation of the second rotatable member. The components may be arranged in a predetermined fashion to generate the desired torque at desired arm positions; for example, an operator may be assisted in raising and keeping their arms above their head by the torque generated around the third axis of rotation by the elastic mechanism.

Tension applied by the elastic mechanism may be manually adjusted or selected by a screw-operated or knob-type manual device, which may comprise discrete settings. The manual device may adjust a distance between the brackets, so tension in the elastic mechanism is adjusted independently of the second rotatable member's rotation. An operator may select the desired tension.

Embodiments of the present disclosure advantageously provide an improved mechanism for selecting and adjusting tension in the elastic mechanism. The degree of tension may vary dynamically during an operator's tasks and based on the dimensions and abilities of different operators.

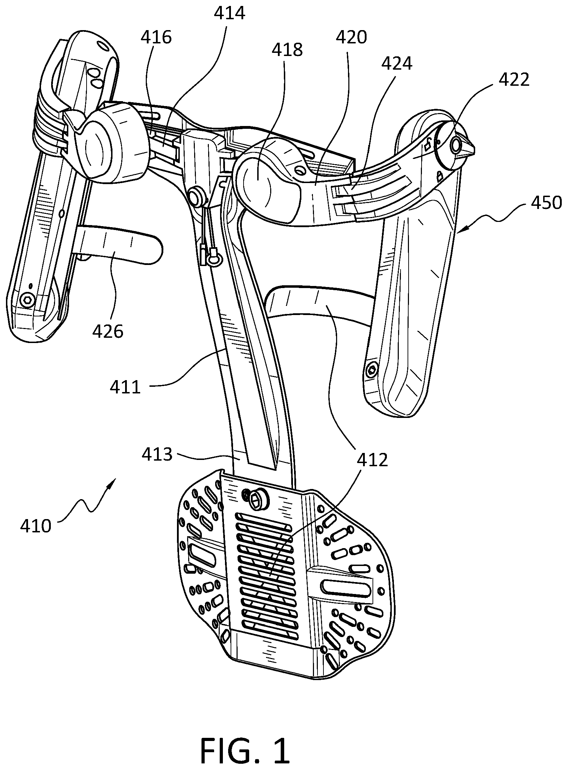

As shown in Fig. 1, an exoskeleton system 410 for assisting an operator in exerting efforts may comprise a garment 412 that can be worn by an operator and arranged to assume a position corresponding to the operator's joint. The garment 412 may additionally be arranged as one or more straps extending to the operator to secure the exoskeleton system 410. The garment is optional, and the exoskeleton system may be provided without such a garment.

The exoskeleton system 410 may further comprise a compensation device 450 carried by or supported on the garment 412 and arranged to compensate resistive moments acting on the joint during the operator's efforts, such as the effects of gravity pulling the operator's arms down. In embodiments, the compensation device 450 may comprise a separate or distinct unit arranged at each operator's arm and generally at the operator's upper arm or shoulder. In other embodiments, the compensation device 450 may be arranged centrally at the operator's back or at yet other locations. The compensation device 450 may function to assist an operator in exerting efforts, such as but not limited to, raising the arms, lifting or manipulating an object, pressing against a surface, holding the arms in the desired position, or other efforts.

The exoskeleton system 410 may comprise a frame 411 arranged to support the operator's compensation device 450. The frame 411 may comprise linear guides 414 extending proximate a user's scapulae and generally opposite each other from a spinal support portion 413. The spinal support portion 413 may attach to the garment 412 and/or by a lumbar support portion not shown. The frame 411 may be formed of a material with enough strength to support the compensation device 450 and transfer forces as the operator engages in potentially physically demanding tasks. The frame 411 may also be formed of a material with enough malleability to be adjusted or shaped to an operator's dimensions.

The compensation device 450 may attach to the frame 411 and the linear guides 414, particularly by sliding block assemblies 416. The sliding block assemblies 416 may be arranged to selectively translate along the linear guides 414 to adjust to the operator's unique dimensions, such as shoulder width and user height, for optimal comfort and compliance. The sliding block assemblies 416 may be arranged to lock at desired locations and be released to translate to a new location. The sliding block assemblies 416 may attach to abduction/adduction assemblies 418 at each arm. The abduction/adduction assemblies 418 arranged to provide a first degree of freedom and allow the operator to abduct/adduct the arm naturally. In embodiments, the sliding block assemblies 416 may be arranged to realize improved kinematic compatibility between the abduction/adduction assemblies 418 and an operator's joints for abduction movements performed in a transverse plane.

First and second elements 420, 422 may connect the compensation device 450 to the abduction/adduction assemblies 418. The first and second elements 420, 422 may be hingedly joined at a joint arm 424 arranged to allow the operator to horizontally abduct/adduct the arm relative to the body in the second degree of freedom.

The compensation device 450 may attach to the operator's arm at a band 426, allowing the arm's motion to activate a rotatable member of the compensation device 450, as described in greater detail herein. The depicted arrangement is not limiting, but alternative arrangements, movements, degrees of freedom, attachments, and components may be arranged to form a system according to the disclosure.

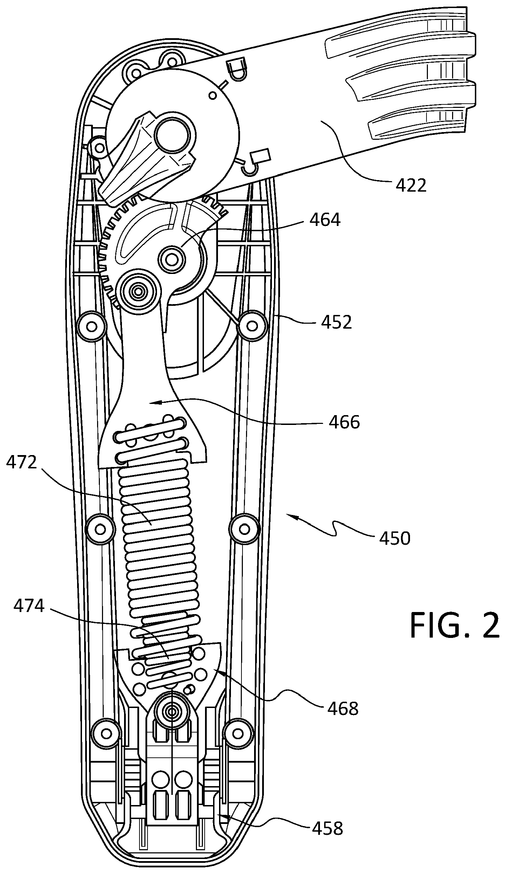

As seen in the embodiment of Figs. 2 - 3, the compensation device 450 may comprise first and second rotatable members or gears 462, 464 housed within a casing 452. The second rotatable member 464 may engage and be rotatable relative to the first rotatable member 462 at an engagement portion 454. The first rotatable member 462 may be arranged to be brought into relative motion about the first axis of rotation 13 because of the movement of the operator's joint.

The compensation device 450 may further comprise an elastic mechanism 456 having a first end connected to the second rotatable member 464 and arranged to impart at the first axis of rotation 13 a moment opposite the resistive moments, e.g., gravity pulling the operator's arms downward. The elastic mechanism 456 may comprise at least two coaxial springs 472, 474 tensioned between first and second bracket assemblies 466, 468. The at least two coaxial springs, 472, 474 may comprise two extension coil springs mounted in parallel, a smaller spring 474 being coaxially placed inside a larger spring 472. The first bracket assembly 466 and the second bracket assembly 468 may each be provided with at least two holes 476 for connecting to at least two coaxial springs 472, 474. While the elastic mechanism is described as having at least two or more coaxial springs, the depicted embodiment is not limiting and may comprise any suitable components or combinations.

According to embodiments, using the at least two coaxial springs 472, 474 allows for finer and more simple tension tuning in the elastic mechanism 456. Further, as the at least two coaxial springs 472, 474 may comprise two extension coil springs mounted in parallel, a smaller spring 474 being coaxially placed inside a larger spring 472, the arrangement decreases the size of the compensation device 450 relative to known exoskeleton systems. The reduced size and compactness of the elastic mechanism 456 advantageously allow for a smaller, less encumbering profile of the compensation device 450 and a lower weight for the device.

The first bracket assembly 466 may pivotally connect to the second rotatable member 464 by a pivot pin 478 extending through the first bracket assembly 466 and the second rotatable member 464. The pivot pin 478 allows the first bracket assembly 466 to rotate about a fourth axis of rotation 16. The fourth axis of rotation I6 may be offset and parallel to the second axis of rotation I4 corresponding to the second rotatable member 464. By being located separately from the second axis of rotation 14, the first bracket assembly 466 may be arranged in a predetermined location for adjusting tension in the elastic mechanism 456 according to particular movements of the joint of the operator and throughout a range of allowed motion in the joint.

The first rotatable member 462 may rotate according to the second rotatable member 464 by contacting and rotating relative to the first rotatable member 462 at an engagement portion 454. The first and second rotatable members 462, 464 may define a plurality of corresponding teeth 477, 479 engaging one another.

The first rotatable member 462 may be formed as a shoulder gear or any suitable fixture. As the first rotatable member 462 rotates in response to the operator's arm movements, the second rotatable member 464 may be rotated to assist an operator in exerting efforts.

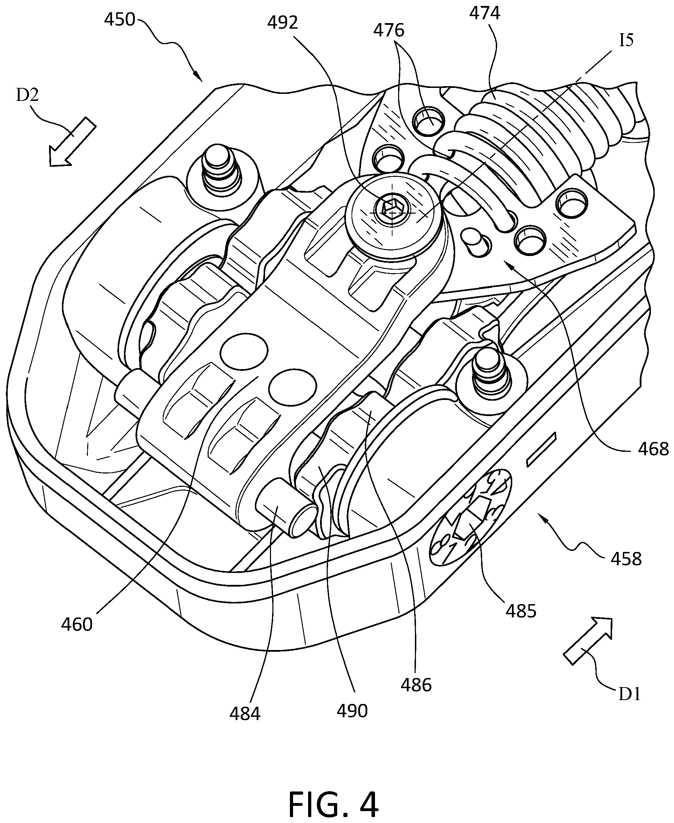

The exoskeleton system 410 may further comprise a regulation device 458 connected to a second end of the elastic mechanism 456 and arranged to adjust tension therein, as illustrated in the schematic sectional view of Fig. 4. The second bracket assembly 468 may pivotally connect to a linkage assembly 460 of the regulation device 458 by a pivot pin 492 extending through the second bracket assembly 468 and the linkage assembly 460. The pivot pin 492 allows the second bracket assembly 468 to rotate about a third axis of rotation I5, enabling the at least first and second springs 472, 474 to be tensioned by the regulation device 458 while rotating according to the movement of the operator's arm.

The regulation device 458 may adjust the length of the elastic mechanism 456 by increasing or decreasing a distance L1 between the first bracket assembly 466 and the second bracket assembly 468, for example, in response to a detection of a position of the operator's joint or by the operator's specified preferences.

The regulation device 458 may comprise a screw or dial 485, arranged to linearly adjust a length of the elastic mechanism 456 by actuating a cam assembly 486 that changes the position of the linkage assembly 460. The linkage assembly 460 may include a rod or protrusion 484 for interacting with the cam assembly 486. The protrusion 484 operates as a cam follower experiencing linear motion in response to rotation of the cam assembly 486 using the dial. The cam assembly 486 may have an irregular shape, such as a cam 490 forming a plurality of steps corresponding to predetermined variations in the distance L1 between the first bracket assembly 466 and the second bracket assembly 468.

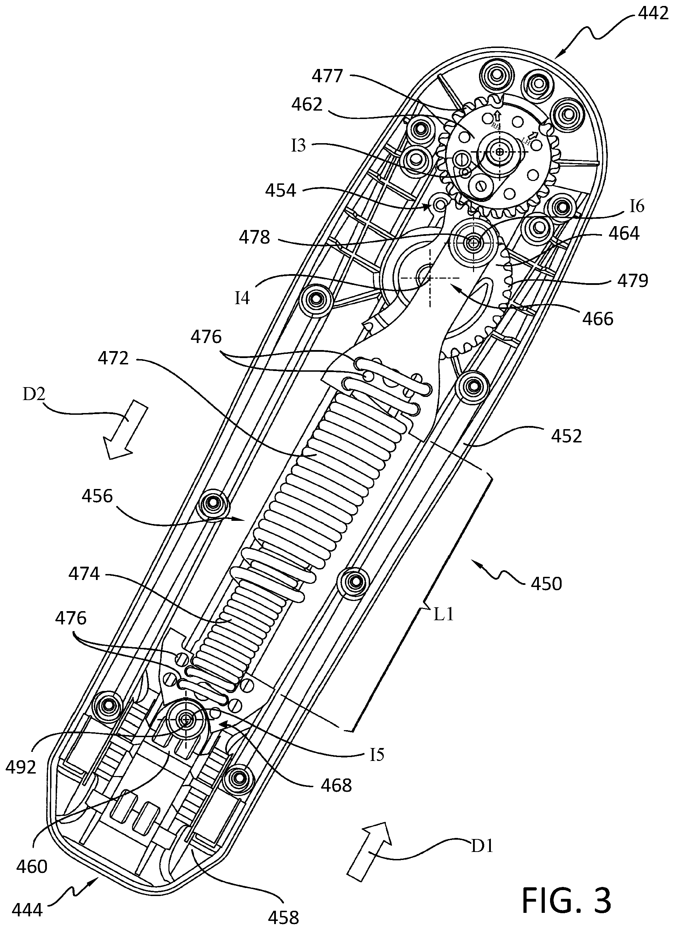

The outcome of the cam assembly 486 can be the linear motion of the linkage assembly 460 between a first end 442 and a second end 444 of the compensation device 450, due to the shape of the cam 490 in Fig. 3. Since the linkage assembly 460 is connected to the second bracket assembly 468 and includes the protrusion 484 engaging with the cam assembly 486, the springs 472, 474 can be adjusted according to the level of assistance desired, such as by merely rotating the dial 485. For example, as an operator rotates the dial 485, the dial 485 may function to move the linkage assembly 460 in a direction D2 away from the second rotatable member 464, and conversely in a direction D1 toward the second rotatable member 464 as the operator's needs may require, and as discussed in greater detail herein.

While described as manually adjustable using dial 485, the exoskeleton system 410 can be configured for automatic or programmable assistance levels. For example, the regulation device 458 may comprise a motor, such as a servomotor, arranged to adjust the dial 485 or the cam assembly 486 directly, based on input by a processor or control unit. The motor may be provided with a sensor, such as an encoder, which may be arranged to communicate a position of the dial 485 or the cam assembly 486 to the processor or the control unit.

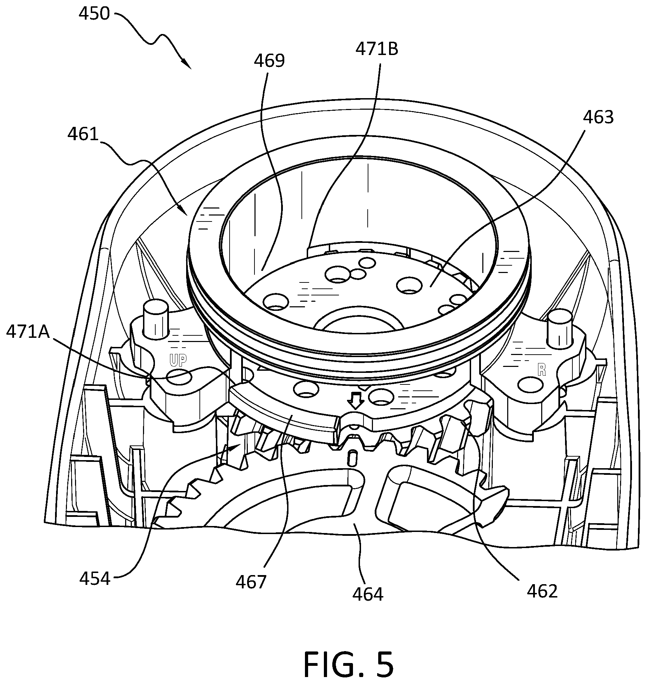

As seen in greater detail in Fig. 5, the compensation device 450 may further comprise a rotational stop assembly 461 comprising both extension and flexion stops to define an allowed degree of motion of the compensation device 450. The rotational stop assembly 461 may engage a follower 463 attached to the first rotatable member 462. The follower 463 may define a protrusion 467 arranged to engage a stop surface 471A, 471B when the maximum flexion and extension angles, respectively, have been reached. The stop surface 471A, 471B, may comprise a gear stop 469 connected to the casing 452. The rotational stop assembly 461 and the elastic mechanism 456 may be arranged such that a torque generated by the compensation device 450 acts against the stop surface 471A, 471B at a predetermined extension or flexion position, such that a condition of maximum extension or flexion may be stably maintained.

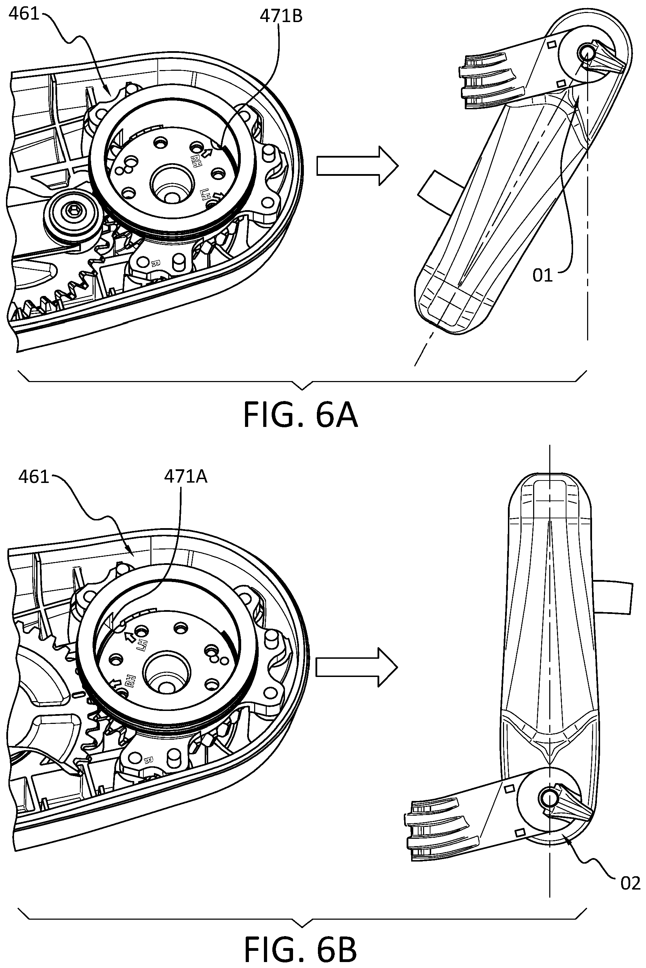

As seen in Figs. 6A - 6B, the stop surface 471A, 471B may be arranged to define an extension end-stroke θ1 and a flexion end-stroke θ2, for example, an extension end-stroke of - 30° and a flexion end-stroke of 180°. The rotational stop assembly 461 can be used for safety, by preventing an extension or flexion of the joint beyond the predetermined extension and flexion end-stroke. The rotational stop assembly 461 may further be used to maintain the maximum extension or flexion for a prolonged period, such as to assist an operator in resisting opposing forces during a prolonged effort requiring maximum extension or flexion.

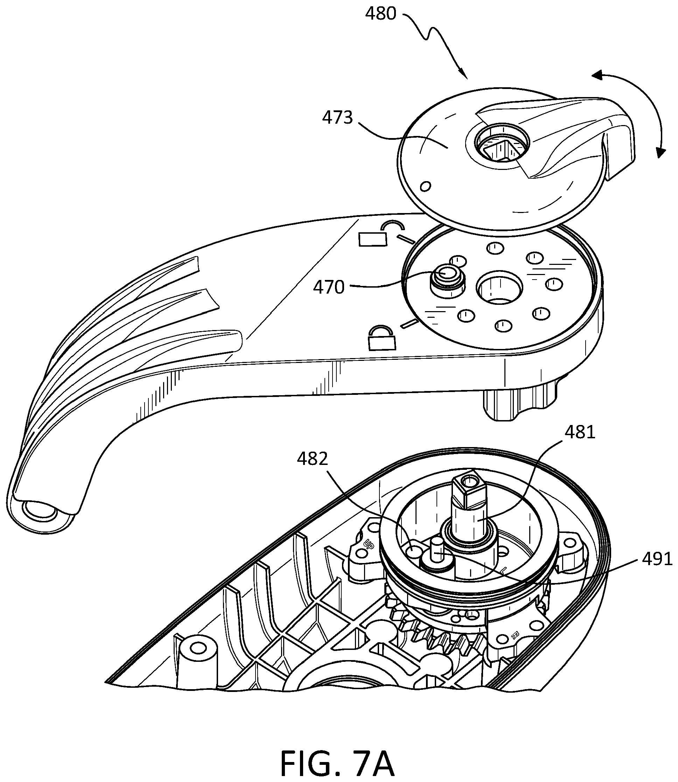

According to the embodiments of Figs. 7A-7D, the rotational stop assembly 461 may further be provided with a safety lock 480 for securing the compensation device 450, for example when not worn, to avoid a sudden release of the elastic energy. The safety lock 480 may comprise a selector or lever 473 provided for actuation by a user from a locked to an unlocked position. The selector 473 may be provided with a plunger 470, or another means that generates tactile and/or acoustic feedback when moved from one position to another and facilitates user-side activation or deactivation of the safety lock.

The safety lock 480 may include a pivot pin 481 arranged to extend from the selector 473 to a position above the first rotatable member 462, for example, along the fourth axis of rotation 16. The pivot pin 481 is configured to move and/or rotate with the actuation of the selector 473 and cause a corresponding rotation of a locking element 482 secured to the first rotatable member 462 by a pivot pin 491. The locking element 482 is arranged to rotate about a fifth axis of rotation I7 at the pivot pin 491 in response to the movement or rotation of the pivot pin 481.

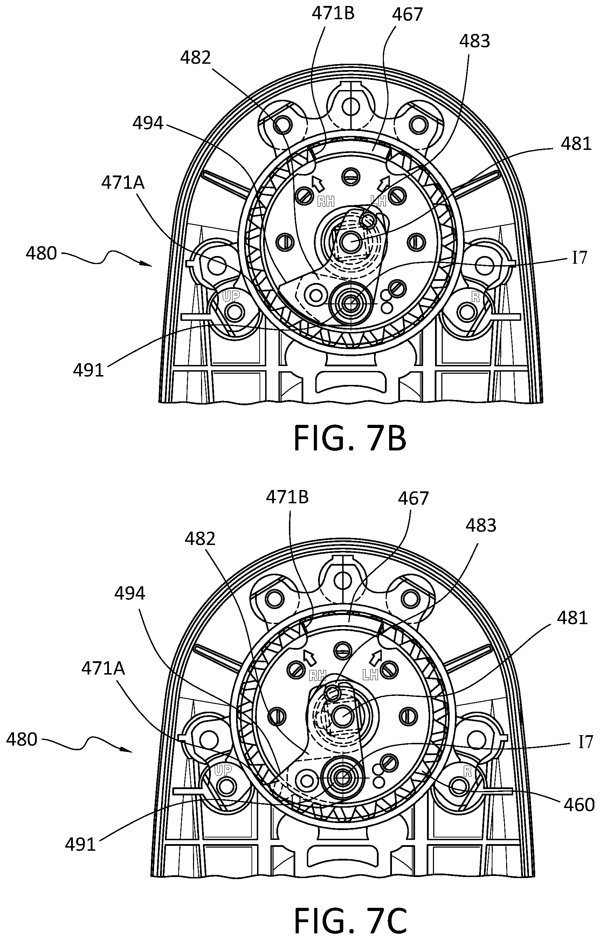

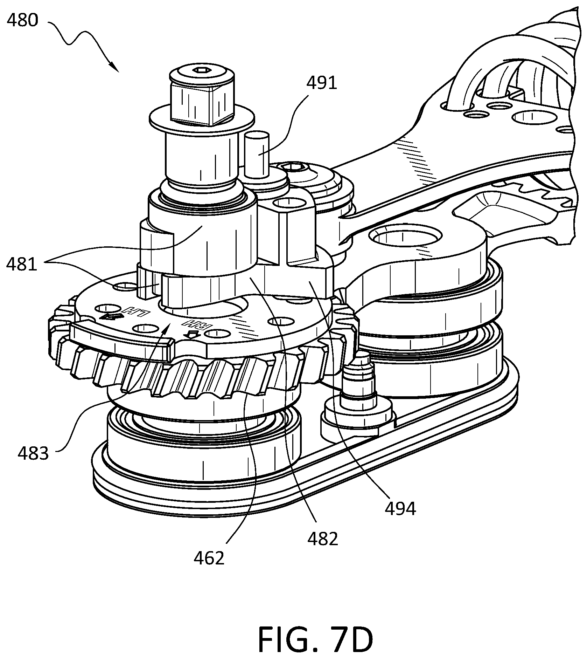

For example, as illustrated in Fig. 7D, the pivot pin 481 may extend into a recess 483 defined by a first end of the locking element 482. The movement of the pivot pin 481 causes the locking element 482 to turn about the fifth axis of rotation 17. When rotated from an open position as shown in Fig. 7B to a locked position in Fig. 7C, a second end 494 of the locking element 482 is configured to rotate and extend against the stop surface 471A of the gear stop 469 connected to the casing 452.

The rotational stop assembly 461 may be configured to allow rotation of the locking element 482 only at a certain extension/flexion angle or within a certain extension/flexion angle window. As shown in Figs. 7B-7C, the locking element 482 may be restricted from rotating by the gear stop 469. It can be voluntarily engaged by acting on the selector 473 only when the maximum extension angle or a specified extension/flexion angle window is reached. The protrusion 467 may contact the stop surface 471B. Acting on the selector 473 outside of the maximum extension angle or extension/flexion angle window is restricted by the gear stop 469, preventing the second end 494 of the locking element 482 from extending. Further, the second end 494 of the locking element 482 may be configured with a flat surface facing the stop surface 471A of the gear stop 469, such that the stop surface 471A may engage the locking element 482.

By providing a system for assisting efforts by an operator according to embodiments of the disclosure, the problem of the exoskeleton and other assist systems being poorly adapted to individual operators' unique dimensions, needs, and tasks is addressed, as the compensation device may be adapted to include a regulation device adjusting a degree of tension, and therefore assistance, provided to an operator based on both the operator's specified preferences and feedback. The system is thereby enabled to provide improved and more accurate assistance to the operator. The embodiments described further provide a system for assisting an operator in exerting efforts that provide improved ergonomics and ease of use, particularly by operating the compensation device to provide adjustable and discrete amounts of torque to aid an operator performing certain effortful motions.

Without prejudice to the invention's principle, the details of construction and the embodiments may vary, even significantly, regarding what has been illustrated purely by way of non-limiting example, without departing from the scope of the disclosure, as this is defined by the annexed claims.

While the disclosure discusses embodiments for the shoulder, embodiments of the disclosure may be used with other limbs, joints, and anatomical portions, including the torso, elbow, wrist/hand, hip, knee, and foot/ankle. Embodiments of the system may be used in other orthopedic, prosthetic, medical, and other devices, and are not limited to the embodiments shown.

Not necessarily all such objects or advantages may be achieved under an embodiment of the disclosure. Those skilled in the art will recognize that the disclosure may be embodied or carried out to achieve or optimize one advantage or group of advantages as taught without achieving other objects or advantages as taught or suggested.

The skilled artisan will recognize the interchangeability of various components from different embodiments described. Besides the variations described, other known equivalents for each feature can be mixed and matched by one of ordinary skill in this art to construct a hinge assembly under principles of the present disclosure. Therefore, the embodiments described may be adapted to systems for any suitable device, including orthopedic, prosthetic, medical, and other devices.

Although the system for assisting an operator in exerting efforts has been disclosed in certain preferred embodiments and examples, it, therefore, will be understood by those skilled in the art that the present disclosure extends beyond the disclosed embodiments to other alternative embodiments and/or uses of the system and obvious modifications and equivalents. It is intended that the scope of the present system disclosed should not be limited by the disclosed embodiments described above but should be determined only by a fair reading of the claims that follow.

## Claims

1. An exoskeleton system (410) arranged to be worn by an operator and assume a position corresponding to a joint of the operator, the exoskeleton system (410) comprising:
a compensation device (450) operable to compensate resistive moments acting on the joint during an effort exerted by the operator, the compensation device (450) comprising:
a first rotatable member (462) and a second rotatable member (464) engaging the first rotatable member (462) at an engagement portion (454), the first rotatable member (462) arranged to be brought into relative motion about a first axis of rotation (13) as a result of movement of the joint of the operator, the second rotatable member (464) rotatable about a second axis of rotation (14);
an elastic mechanism (456) defining a first end connecting to the second rotatable member (464) to impart on the first axis of rotation (I3) a moment opposite to the resistive moments; and
a regulation device (458) connecting to a second end of the elastic mechanism (456) for adjusting tension in the elastic mechanism (456) by adjusting a distance (L1) between the first and second ends thereof;
**characterized in that** the elastic mechanism (456) includes first and second springs (472, 474), wherein the first spring (472) is larger than a second spring (474), and the second spring (474) is provided inside the first spring (472), the first and second springs are connected to a first bracket assembly (466) pivotally and eccentrically connected to the second rotatable member (464) by a pivot pin (478), the pivot pin (478) allowing the first bracket assembly (466) to rotate about a fourth axis of rotation (16) offset and parallel to the second axis of rotation (14);
wherein the first and second springs are connected to a second bracket assembly (468) to the regulation device (458) by a pivot pin (492) allowing the second bracket (468) to pivot about a third axis of rotation (I5).

2. The exoskeleton system (410) of claim 1, wherein the regulation device (458) for adjusting tension in the elastic mechanism (456) comprises a cam (486) and a follower (460, 484), the follower (460, 484) connected to the second end of the elastic mechanism (456).

3. The exoskeleton system (410) of claim 2, wherein a surface profile of the cam (486) defines a plurality of predefined tension settings for the regulation device (458), said plurality of predefined tension settings corresponding to variations of the distance (L1) between the first and second ends of the elastic mechanism (456).

4. The exoskeleton system (410) of claim 3, further comprising a dial (485) connected to the cam (486), wherein the plurality of predefined tension settings of the cam (486) are manually adjustable by rotation of the dial (485), the follower (460, 484) arranged to linearly move in first and second directions (D1, D2) according to rotation of the dial (485) and the cam (486) to adjust the tension in the elastic mechanism (456).

5. The exoskeleton system (410) of claim 1, further comprising a rotational stop assembly (461) arranged to engage a follower (463) connected to the first rotatable member (462) at least at a maximum extension angle of the first rotatable member (462).

6. The exoskeleton system (410) of claim 5, wherein the rotational stop assembly (461) includes a gear stop (469) defining first and second stop surfaces (471A, 471B) arranged to engage the follower (463) at least at the maximum extension angle, the gear stop (469) fixed to a casing (452).

7. The exoskeleton system (410) of claim 5, wherein the rotational stop assembly (461) is arranged to engage the follower (463) connected to the first rotatable member (462) at least at a maximum flexion angle of the first rotatable member (462).

8. The exoskeleton system (410) of claim 5, wherein the follower (463) defines a protrusion (467) arranged to engage first and second stop surfaces (471A, 471B) depending on the follower (463) rotating to the maximum extension angle, the first and second stop surfaces (471A, 471B) defined by a gear stop (469) fixedly connected to a casing (452).

9. The exoskeleton system (410) of claim 1, further comprising a rotational stop assembly (461) and a safety lock (480), the rotational stop assembly (461) arranged to engage a manually adjustable locking element (482) of the safety lock (480) connected to the first rotatable member (462).

## Patentansprüche

1. Exoskelettsystem (410), das dafür angeordnet ist, durch einen Bediener getragen zu werden und eine Position einzunehmen, die einem Gelenk des Bedieners entspricht, wobei das Exoskelettsystem (410) Folgendes umfasst:
eine Ausgleichseinrichtung (450), die funktionsfähig ist, um Widerstandmomente auszugleichen, die während einer Anstrengung, die durch den Bediener ausgeübt wird, auf das Gelenk einwirken, wobei die Ausgleichseinrichtung (450) Folgendes umfasst:
ein erstes drehbares Element (462) und ein zweites drehbares Element (464), welches das erste drehbare Element (462) an einem Eingriffsabschnitt (454) in Eingriff nimmt, wobei das erste drehbare Element (462) dafür angeordnet ist, im Ergebnis einer Bewegung des Gelenks des Bedieners in eine relative Bewegung um eine erste Drehachse (I3) gebracht zu werden, wobei das zweite drehbare Element (464) um eine zweite Drehachse (I4) drehbar ist,
einen elastischen Mechanismus (456), der ein erstes Ende definiert, das sich mit dem zweiten drehbaren Element (464) verbindet, um auf der ersten Drehachse (I3) ein Moment, entgegengesetzt zu den Widerstandsmomenten, mitzuteilen, und
eine Regulationseinrichtung (458), die sich mit einem zweiten Ende des elastischen Mechanismus (456) verbindet, zum Einstellen einer Spannung in dem elastischen Mechanismus (456) durch Einstellen einer Entfernung (L1) zwischen dem ersten und dem zweiten Ende desselben,
**dadurch gekennzeichnet, dass**
der elastische Mechanismus (456) eine erste und eine zweite Feder (472, 474) einschließt, wobei die erste Feder (472) größer ist als die zweite Feder (474) und die zweite Feder (474) innerhalb der ersten Feder (472) bereitgestellt wird, wobei die erste und die zweite Feder mit einer ersten Halterungsbaugruppe (466) verbunden sind, die schwenkbar und exzentrisch mit dem zweiten drehbaren Element (464) durch einen Drehzapfen (478) verbunden ist, wobei der Drehzapfen (478) ermöglicht, dass sich die erste Halterungsbaugruppe (466) um eine vierte Drehachse (I6) dreht, die zu der zweiten Drehachse (I4) versetzt und parallel ist,
wobei die erste und die zweite Feder mit einer zweiten Halterungsbaugruppe (468) verbunden sind, die mit der Regulationseinrichtung (458) durch einen Drehzapfen (492) verbunden ist, der ermöglicht, dass sich die zweite Halterungsbaugruppe (468) um eine dritte Drehachse (I5) dreht.

2. Exoskelettsystem (410) nach Anspruch 1, wobei die Regulationseinrichtung (458) zum Einstellen einer Spannung in dem elastischen Mechanismus (456) einen Nocken (486) und einen Stößel (460, 484) umfasst, wobei der Stößel (460, 484) mit dem zweiten Ende des elastischen Mechanismus (456) verbunden ist.

3. Exoskelettsystem (410) nach Anspruch 2, wobei ein Oberflächenprofil des Nockens (486) eine Vielzahl von vordefinierten Spannungseinstellungen für die Regulationseinrichtung (458) definiert, wobei die Vielzahl von vordefinierten Spannungseinstellungen Variationen der Entfernung (L1) zwischen dem ersten und dem zweiten Ende des elastischen Mechanismus (456) entspricht.

4. Exoskelettsystem (410) nach Anspruch 3, das ferner eine Wählscheibe (485) umfasst, die mit dem Nocken (486) verbunden ist, wobei die Vielzahl von vordefinierten Spannungseinstellungen des Nockens (486) durch eine Drehung der Wählscheibe (485) manuell einstellbar ist, wobei der Stößel (460, 484) dafür angeordnet ist, sich entsprechend einer Drehung der Wählscheibe (485) und des Nockens (486) linear in einer ersten und einer zweiten Richtung (D1, D2) zu bewegen, um die Spannung in dem elastischen Mechanismus (456) einzustellen.

5. Exoskelettsystem (410) nach Anspruch 1, das ferner eine Drehanschlagsbaugruppe (461) umfasst, die dafür angeordnet ist, einen Stößel (463), der mit dem ersten drehbaren Element (462) verbunden ist, zumindest bei einem maximalen Ausdehnungswinkel des ersten drehbaren Elements (462) in Eingriff zu nehmen.

6. Exoskelettsystem (410) nach Anspruch 5, wobei die Drehanschlagsbaugruppe (461) einen Getriebeanschlag (469) einschließt, der eine erste und eine zweite Anschlagsfläche (471A, 471B) definiert, die dafür angeordnet sind, den Stößel (463) zumindest bei dem maximalen Ausdehnungswinkel in Eingriff zu nehmen, wobei der Getriebeanschlag (469) an einem Gehäuse (452) befestigt ist.

7. Exoskelettsystem (410) nach Anspruch 5, wobei die Drehanschlagsbaugruppe (461) dafür angeordnet ist, den Stößel (463), der mit dem ersten drehbaren Element (462) verbunden ist, zumindest bei einem maximalen Biegungswinkel des ersten drehbaren Elements (462) in Eingriff zu nehmen.

8. Exoskelettsystem (410) nach Anspruch 5, wobei der Stößel (463) einen Vorsprung (467) definiert, der dafür angeordnet ist, in Abhängigkeit davon, dass sich der Stößel (463) bis zu dem maximalen Ausdehnungswinkel dreht, die erste und die zweite Anschlagsfläche (471A, 471B) in Eingriff zu nehmen, wobei die erste und die zweite Anschlagsfläche (471A, 471B) durch einen Getriebeanschlag (469) definiert werden, der fest mit einem Gehäuse (452) verbunden ist.

9. Exoskelettsystem (410) nach Anspruch 1, das ferner eine Drehanschlagsbaugruppe (461) und eine Sicherheitsverriegelung (480) umfasst, wobei die Drehanschlagsbaugruppe (461) dafür angeordnet ist, ein manuell einstellbares Verriegelungselement (482) der Sicherheitsverriegelung (480) in Eingriff zu nehmen, das mit dem ersten drehbaren Element (462) verbunden ist.

## Revendications

1. Système d'exosquelette (410) agencé pour être porté par un opérateur et prendre une position correspondant à une articulation de l'opérateur, le système d'exosquelette (410) comprenant :
un dispositif de compensation (450) actionnable pour compenser les moments de résistance agissant sur l'articulation lors d'un effort exercé par l'opérateur, le dispositif de compensation (450) comprenant :
un premier élément rotatif (462) et un deuxième élément rotatif (464) s'engageant avec le premier élément rotatif (462) sur une portion d'engagement (454), le premier élément rotatif (462) étant agencé pour être mis en mouvement relatif autour d'un premier axe de rotation (I3) à la suite d'un mouvement de l'articulation de l'opérateur, le deuxième élément rotatif (464) étant rotatif autour d'un deuxième axe de rotation (I4) ;
un mécanisme élastique (456) définissant une première extrémité qui se connecte au deuxième élément rotatif (464) pour conférer au premier axe de rotation (I3) un moment opposé aux moments de résistance ; et
un dispositif de régulation (458) qui se connecte à une deuxième extrémité du mécanisme élastique (456) pour ajuster la tension dans le mécanisme élastique (456) en ajustant la distance (L1) entre ses première et deuxième extrémités ;
**caractérisé en ce que** le mécanisme élastique (456) inclut des premier et deuxième ressorts (472, 474), dans lequel le premier ressort (472) est plus grand que le deuxième ressort (474), et le deuxième ressort (474) est pourvu à l'intérieur du premier ressort (472), les premier et deuxième ressorts sont connectés à un premier ensemble de support (466) qui est connecté de manière pivotante et excentrique au deuxième élément rotatif (464) par une broche de pivot (478), la broche de pivot (478) permettant au premier ensemble de support (466) de tourner autour d'un quatrième axe de rotation (I6) décalé par rapport au deuxième axe de rotation (I4) et parallèle à celui-ci ;
dans lequel les premier et deuxième ressorts sont connectés à un deuxième ensemble de support (468) sur le dispositif de régulation (458) par une broche de pivot (492) permettant au deuxième support (468) de pivoter autour d'un troisième axe de rotation (I5).

2. Système d'exosquelette (410) selon la revendication 1, dans lequel le dispositif de régulation (458) pour ajuster la tension dans le mécanisme élastique (456) comprend une came (486) et un suiveur (460, 484), le suiveur (460, 484) étant connecté à la deuxième extrémité du mécanisme élastique (456).

3. Système d'exosquelette (410) selon la revendication 2, dans lequel un profil de surface de la came (486) définit une pluralité de réglages de tension prédéfinis pour le dispositif de régulation (458), ladite pluralité de réglages de tension prédéfinis correspondant à des variations de la distance (L1) entre les première et deuxième extrémités du mécanisme élastique (456).

4. Système d'exosquelette (410) selon la revendication 3, comprenant en outre une molette (485) connectée à la came (486), dans lequel les réglages de la pluralité de réglages de tension prédéfinis de la came (486) sont ajustables manuellement par une rotation de la molette (485), le suiveur (460, 484) étant agencé pour se déplacer linéairement dans les première et deuxième directions (D1, D2) en fonction de la rotation de la molette (485) et de la came (486) afin de régler la tension dans le mécanisme élastique (456).

5. Système d'exosquelette (410) selon la revendication 1, comprenant en outre un ensemble de butée de rotation (461) agencé pour s'engager avec un suiveur (463) connecté au premier élément rotatif (462) au moins à un angle d'extension maximal du premier élément rotatif (462).

6. Système d'exosquelette (410) selon la revendication 5, dans lequel l'ensemble de butée de rotation (461) inclut une butée d'engrenage (469) définissant des première et deuxième surfaces de butée (471A, 471B) agencées pour s'engager avec le suiveur (463) au moins à l'angle d'extension maximal, la butée d'engrenage (469) étant fixée à un boîtier (452).

7. Système d'exosquelette (410) selon la revendication 5, dans lequel l'ensemble de butée de rotation (461) est agencé pour s'engager avec le suiveur (463) connecté au premier élément rotatif (462) au moins à un angle de flexion maximal du premier élément rotatif (462).

8. Système d'exosquelette (410) selon la revendication 5, dans lequel le suiveur (463) définit une protrusion (467) agencée pour s'engager avec les première et deuxième surfaces de butée (471A, 471B) en fonction de la rotation du suiveur (463) jusqu'à l'angle d'extension maximal, les première et deuxième surfaces de butée (471A, 471B) étant définies par une butée d'engrenage (469) connectée de manière fixe à un boîtier (452).

9. Système d'exosquelette (410) selon la revendication 1, comprenant en outre un ensemble de butée de rotation (461) et un verrou de sécurité (480), l'ensemble de butée de rotation (461) étant agencé pour s'engager avec un élément de verrouillage ajustable manuellement (482) du verrou de sécurité (480) connecté au premier élément rotatif (462).
